# EUROPEAN PATENT SPECIFICATION

(11) **EP 3 386 049 B1**
(45) Date of publication and mention of the grant of the patent: **13.10.2021**
(21) Application number: 18165868.3
(22) Date of filing: 05.04.2018
(51) Int. Cl.: H02G 3/04

(54) **HYGIENIC CABLE HOLDER**
HYGIENISCHER KABELHALTER
SUPPORT DE CÂBLE HYGIÉNIQUE

(30) Priority: 05.04.2017 BE 175240
(43) Date of publication of application: 10.10.2018
(73) Proprietor: Vecotec bvba, 8840 Staden (BE)
(72) Inventor: VERPLANCKE, Bob, 8840 STADEN (BE)
(74) Representative: Chielens, Kristof

(56) References cited:
- EP-A1- 1 126 569
- WO-A1-99/10957
- FR-A1- 2 517 799
- FR-A1- 2 673 335
- US-A- 3 226 468
- RAIMONDI R L: "FLAT RIBBON CABLE RETENTION", IBM TECHNICAL DISCLOSURE BULLETIN,, vol. 17, no. 11, 1 April 1975 (1975-04-01) , pages 3375-3376, XP001457054,

## Description

The present invention relates to, a cable holder for hygienically securing cables and/or lines. The present invention relates in particular to a cable holder for supporting and securing cables and lines (e.g. for compressed air or water) on walls or machines without the use of additional securing means, such as cable ties and brackets.

The cable holder according to the present invention was developed for use in the food industry. In the foods industry, cables have to be secured as hygienically as possible. This means that both the cable holder and the cables provided therein have to be easy to clean.

Perishable product remains (small pieces of meat, vegetables, dairy products, etc.) which come into contact with the securing system for one reason or another, should not remain in the system. After a short period of time, these product remains will (defrost and) perish, resulting in a significant increase in the growth of bacteria. These undesired bacteria may then end up back in the food, which is detrimental to the food safety. It is therefore important that the securing system can be cleaned to the greatest extent possible, so that the perishable remains can be removed.

The current way of securing cables, lines and the like by means of pipes, tubes, etc. is a risk, because bacteria may grow in these profiles. As the inside of the pipes, tubes, etc. is difficult to access, it is also not possible to clean them to a sufficient degree, resulting in the growth of bacteria.

So as to be able to do this in a hygienic manner, it is also possible to use closed pipes with cable glands on the ends, but this has the drawback that drawstrings are required in order to be able to accommodate several cables in the pipe. However, this way of working is also time-consuming. In addition, it is virtually impossible to fit additional cables later on without dismantling the closed pipes.

Most often, an open system, in which the cables and/or lines are freely accessible, is used. Such open systems use so-called cable nets or wire ducts, to which the cables and/or lines are secured by means of additional securing means, such as cable ties.

Cable nets or wire ducts are made from longitudinal and transverse wires which have been welded together and have the drawback that vegetables can easily remain behind, become hooked or stuck at the welded joint. These perishable products may then start to rot, which may result in the growth of bacteria.

The use of additional securing means, such as cable ties, with a classical wire duct also has its drawbacks. At the point where the cables are tied together by means of a cable tie, dirt may accumulate between the cables and the cable tie, resulting in the growth of bacteria.

The cable ties themselves also create additional problems when they become detached, because, since they are made of plastic and the foodstuffs are often also packaged in a plastic enclosure, it is difficult to detect them and remove them from the product stream. It will be clear that when a person eats vegetables containing a piece of plastic, this may have detrimental consequences. In addition, fitting cable ties is also time-consuming.

The existing cable nets are also always constructed in such a way that one or more uninterrupted round wires are situated on the rear side of the nets. Between these wires and the surface to which these are fastened, product remains may also still accumulate, thus resulting in the growth of bacteria.

If pressurized water is used to clean after a production run in the food industry, the bacteria are spread around. This bears the risk of the bacteria being spread throughout the factory and contaminating the open product or the machines. In the latest recommendations on cleaning of production lines in the food industry, the use of water is discouraged and instead the advice is given to use wipes sprinkled with an alcoholic agent (disinfection) to clean the machines, cable guides, etc. regularly. To this end, it has to be possible to untie the cables in a simple manner, since, once they have been untied, it is possible to use the wipe on all sides of the cables and thus to clean them efficiently. Then, it has to be possible to secure them in the system again, so that they no longer hang loosely and are not able to rotate along with rotating components of the machines.

French patent FR 2 673 335 describes a flexible cable holder, comprising an elastic element which has to be deformed in order to make it possible for cables to be introduced and held securely. However, such a cable holder has the drawback that it will start to sag after some time, due to the weight of the cables. In addition, such a cable holder can only be secured on a surface with difficulty.

RAIMONDI R L: "FLAT RIBBON CABLE RETENTION", IBM TECHNICAL DISCLOSURE BULLETIN, vol. 17, no. 11, 1 April 1975 (1975-04-01), pages 3375-3376, XP001457054, discloses a cable holder according to the preamble of claim 1.

It is therefore an object of the present invention to develop a cable holder which can easily be produced and which allows a cable and/or line to be secured in a simple and quick way and which, in addition, is easy to clean.

The object of the invention is achieved by providing a cable holder for hygienically securing cables and/or lines, according to claim 1. The wire profile has a diameter of between 2 and 15 mm, preferably of between 3 and 12 mm. Due to the use of a rigid wire profile, the support part and screening parts remain in a fixed position with respect to each other and this before, during and after the fitting of a cable and/or line. In each zone, the support and screening parts will form a holding space, as it were, for the cables and/or lines.

The wire profile is bent into a shape, in which case a repeating pattern (zones) is created with an (access) opening on one side or corner between which the cables and/or lines can be placed (woven). When viewing the secured cables along the length direction, it can be seen that these are surrounded by the profile. In a transverse direction of the profile, the opening can be seen. Due to the rigidity of the secured cables, they are automatically locked between the profile in the extended state. In each zone, the access opening is between two screening parts and this opening provides access to the holding spaces, in particular the support part. Consequently, the support part is delimited at both its ends by a screening part. In the first place, the screening parts will prevent the unintentional loss of the cable and/or line from the cable holder, but, depending on the location of the cables and/or lines or the position of the cable holder, they will also, in some cases, serve as a support for these cables and/or lines. Placing cables and/or lines in such a cable holder also has the advantage that these cables and/or lines can easily be set free, e.g. during cleaning, and, if necessary, be removed from the cable holder.

As the wire profile is an uninterrupted round wire, it is an open structure and thus easy to clean. As it is an uninterrupted round wire, there are no cross-connections of wires, so that no residual material can become trapped. The use of a wire having a circular cross section also has the advantage that there are no flat surfaces and that water or another liquid will readily run off, so that no stagnant water remains behind on the cable holder which could stimulate the growth of bacteria.

Due to the repeating pattern (zones) which create an opening on one side, it is possible to weave the cables and due to the rigidity of the cables, these are automatically locked. As a result thereof, no additional connecting means are necessary and the cables are loosely locked in the profile.

By applying a slight force in the transverse direction of a locked cable, it is also possible to remove it from the cable holder through the opening and this without deforming the holder. As a result thereof, these can be cleaned regularly using a disinfecting wipe.

In the cable holder according to the invention, the support part comprises a pointed securing part by means of which the cable holder is securable on a securing surface. In order to form the pointed securing part, a V shape is provided in a support part of the wire profile at regular distances. By means of the pointed securing part, it is possible to weld the cable holder to an existing structure, or to secure or clamp it on the securing surface by means of a securing element. As a result thereof, the cable holder and the securing surface are only connected to each other via a number of point contacts, thus making them readily cleanable.

Since the cables and/or lines in this system are surrounded (enclosed) by the profile, but still hang loosely, the cables can move separately from one another and can readily be cleaned.

Since no additional securing means (cable ties) are required, fitting this system also saves time and this results in an economic advantage.

In the practical embodiment of the present invention, a round wire profile will be used as the base material. This wire will be formed in the repeating pattern. The repeat distance of the pattern is between 50 and 500 mm. The passage on the inner side of the profile may vary in accordance with the number of cables that have to be secured. The opening via which the cables can be woven into the profile varies between 5 and 50 mm.

Various embodiments of the invention are possible. These may differ in accordance with the form of the repeating pattern. It is typical of the repeating pattern that several (access) openings are created. Via these openings, the cables can be introduced (woven) into the cable holder. Depending on the pattern, this opening may in each case be situated on the same side or may be on alternate sides.

Various embodiments of the cable holder according to the invention are possible. The form of the enclosure of the cables to be secured may vary. In the figures, viewing along the length direction of the cables to be secured, there is always a polygonal holding space which encloses the cables, preferably the space has an odd number of corners.

Various embodiments of the invention are possible. The cross section of the wire profile may also differ, it will be made from a round wire. Any other shape of cross section may be used, such as for example square, rectangular cross sections, oval cross section, etc.

Various embodiments of the invention are possible. Regarding material of the wire profile, there are various options, such as steel, stainless steel, galvanized steel, aluminium, plastic, etc.

Various embodiments of the invention are possible. The shape which creates the distance between the profile and the securing surface may have various shapes, such as V shape, U shape, etc.

The invention is mainly intended for use in the food industry, but may also be used in various other environments where cables or lines have to be secured. Various embodiments of the invention are possible. The combination of the wire profile with other components, such as closed tubes, resulting in cable ladders falls under the protection of the present invention.

Preferred embodiments of the cable holder according to the invention are described still further in the dependent claims.

The present description relates also to a cable ladder assembly for hygienically securing cables and/or lines, comprising a number of cable holders, in which the said assembly comprises two securing profiles extending parallel to each other, in which the cable holders are placed next to each other in a direction at right angles to the length direction of the securing profiles and are secured on the said securing profiles, and in which, in use, the cables and/or lines extend along the length direction of the securing profiles. The securing profiles are preferably hollow rectangular profiles. The various cable holders are placed a distance apart. Preferably, the juxtaposed cable holders extend parallel to each other.

In a preferred embodiment of the cable ladder assembly, the said cable holders are made from a one-piece rigid wire profile which comprises a number of recurring zones, in which the wire profile is folded several times, so that a holding space for a cable and/or line is formed at the location of each zone.

Preferably, use is made of a cable holder having one or more characteristics as described above and/or as described in Claims 1 to 9.

In order to further illustrate the features of the present invention and to indicate additional advantages and particulars, a more detailed description of the cable holder and cable ladder assembly according to the invention will now be given. It will be clear that nothing in the following description may be interpreted as a limitation of the protection of the invention defined in the claims.

In this description, reference numerals and letters are used to refer to the attached drawings, in which:
- ***Fig. 1*** *shows a perspective view of a cable holder according to the invention;*
- ***Fig. 2*** *shows a cross section of a recurring zone in which the support part and the adjacent screening parts are visible;*
- ***Fig. 3*** *shows a view of the cable holder illustrated in* *Fig. 1* *in which two cables are arranged;*
- ***Fig. 4*** *shows a view of a cable holder according to the invention which shows how a cable is placed;*
- ***Fig. 5*** *shows an image of a cable holder according to the invention which is provided on a securing plate via the pointed securing parts;*
- ***Fig. 6*** *shows a detail view of the securing arrangement of the cable holder on a securing surface;*
- ***Fig. 7*** *shows a view of a cable holder in which two extended cables are placed, as a result of which they are locked in the holder, and in which the holder is provided on a securing plate;*
- ***Fig. 8*** *shows a perspective view of a cable ladder assembly;*
- ***Fig. 9*** *shows a view of the cable ladder illustrated in* *Fig. 8* *and provided with cables;*
- ***Fig. 10*** *shows a detail view of a part of a cable ladder assembly;*
- ***Fig. 11*** *shows a view of a model in which the pattern is made from sheet material instead of wire material.*

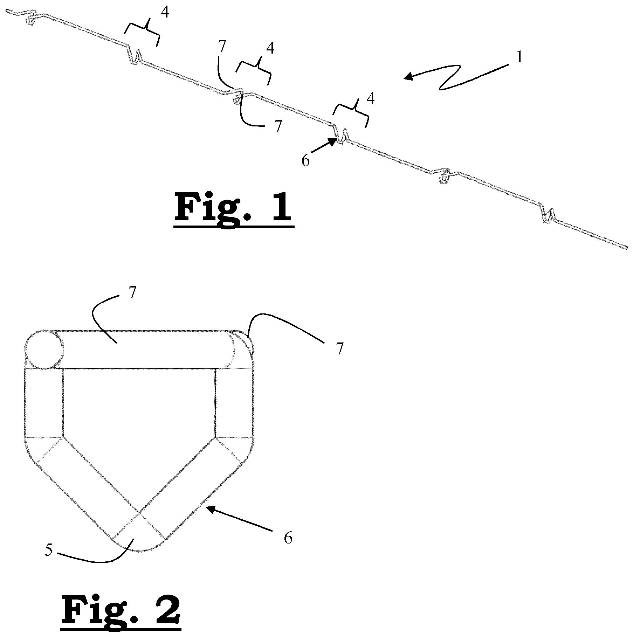

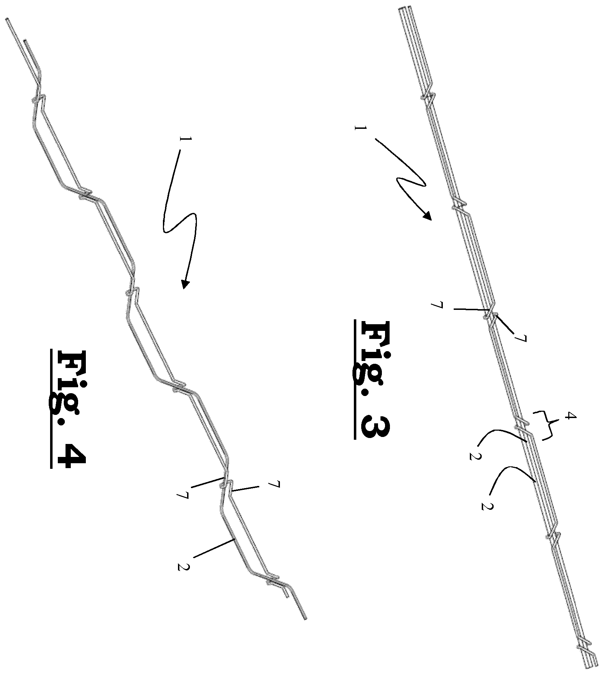

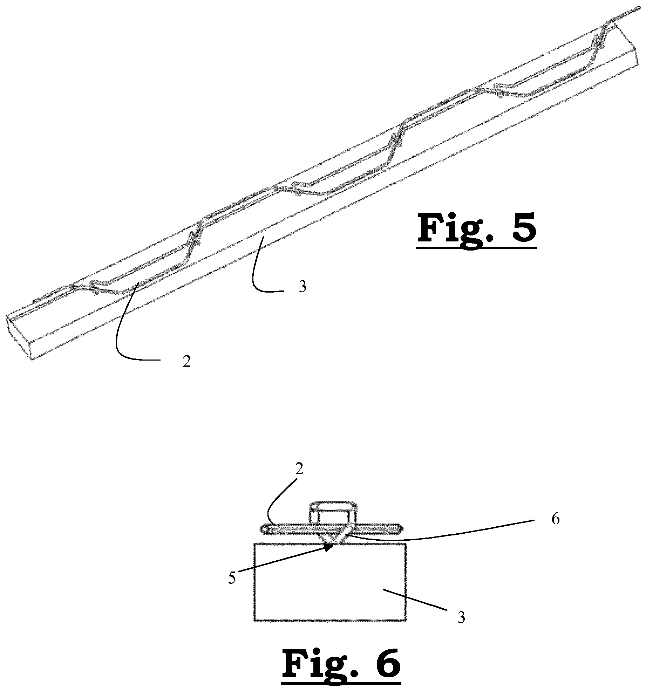

First of all, the present invention relates to a cable holder (1) for hygienically securing cables (2) and/or lines. Such a cable holder (1) is illustrated in Figs. 1 to 7. The cable holder (1) is made from a one-piece rigid wire profile which extends in the length direction and comprises a number of recurring zones (4) in which the wire profile is folded a number of times, so that a support part (6) for a cable (2) and/or line and screening parts (7) are formed at the location of each zone. With such a cable holder (1), a cable (2) and/or line may be placed bearing against the support part (6) by means of flexible bending of the cable (2) along the screening parts (7). In this case, the screening parts (7) prevent unintentional loss of the cable (2) and/or line from the cable holder (1). With such a cable holder (1), the cables (2) and/or lines extend along the length direction of the cable holder (1).

This cable holder (1) was developed to secure cables (2) in a hygienic way. Due to its specific design, in particular the design of the support part (6) in particular the pointed securing part (5), the cable holder (1) is securable in a practical manner on a securing surface (3).

The cable holder (1) is made from an uninterrupted bent wire profile. By bending it to a specific shape, a repeating pattern of successive zones (4) is produced. This pattern creates an opening in the profile, as a result of which a cable and/or line can be woven in the cable holder (1), as it were. When the cable in the holder (1) is then pulled straight, the cable, partly because of its rigidity, is enclosed by the profile and is thus locked. In the absence of external forces, it will thus always remain on the inside of the profile.

Fig. 2 shows a cross section which clearly shows how the wire profile is bent in each zone (4). It also clearly shows that the support part (6) comprises a pointed securing part (5) by means of which the cable holder is securable on a securing surface. The securing part (5) is formed by making a V-shaped bend (fold). Due to this fold (5) in the wire profile, a distance is created between the cables (2) and the securing surface (3). This distance benefits the cleanability of the profile.

Securing the cable holder on a securing surface is preferably achieved , but if welding is not possible, other (alternative) securing methods, for example using securing hooklets, may be used.

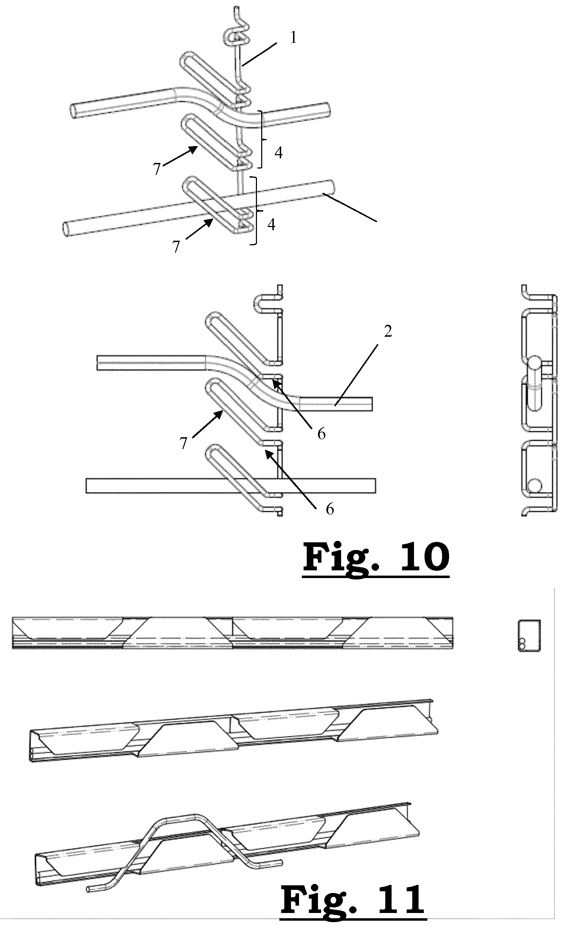

Fig. 11 shows a number of embodiments in which the cable holder is made from sheet material instead of wire material. This sheet material may be metal, but may also be plastic.

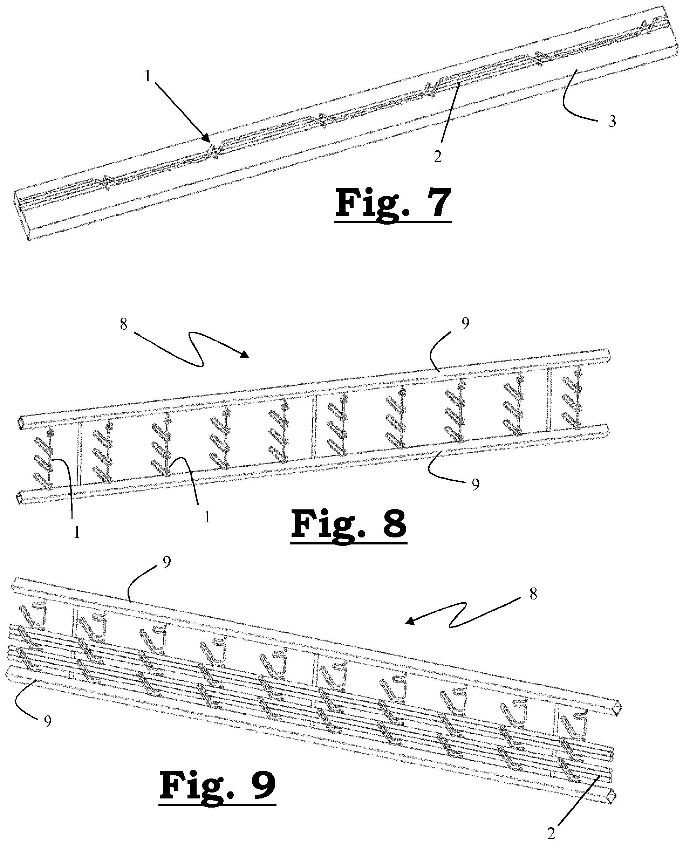

The present description also relates to a cable ladder assembly (8) for hygienically securing cables (2) and/or lines, comprising a number of cable holders (1). Such an assembly is presented in Figs. 8 to 10. The said assembly (8) has at least two parallel securing profiles (9). These securing profiles (9) are hollow rectangular profiles made of metal. Obviously, the securing profiles may be designed differently, such as for example round solid bars, round hollow tubular elements, etc. When securing the assembly on a securing surface, it is preferred if the securing profiles (9) are placed diagonally, so that the surfaces of the securing profiles are arranged at a downward angle. As a result thereof, there are no flat surfaces and liquids and/or any product remains can easily run off.

Between the securing profiles (9), cable holders (1) are placed in a direction at right angles to the length direction of the securing profiles (9). The cable holders (1) are placed a distance apart, preferably parallel to each other. At their ends, they are secured on the said securing profiles (9), preferably via a welded joint. In use, the cables (2) and/or lines extend along the length direction of the securing profiles (9), as is evident from Fig. 9, inter alia.

The cable holders (1) are made from a one-piece rigid wire profile which comprises a number of recurring and successive zones (4) (see, inter alia, Fig. 10) in which the wire profile is folded a number of times, so that a holding space for a cable (2) and/or line is formed at the location of each zone.

In each zone (4), a support part (6) for a cable (2) and/or line and a screening part (7) are formed by folding or bending the wire profile. Due to the fact that the zones (4) succeed each other, an access opening is formed between the screening part of the one zone and the screening part of the next zone, via which a cable (2) and/or line can be placed in the holding space. In use, the cable and/or line may bear at least partly against the support part (6) and/or at least partly against the screening part (7). In use, the screening parts (7) are preferably arranged upright and will thus prevent unintentional loss of the cable (2) and/or line from the cable holder (1).

## Claims

1. Cable holder (1) for hygienically securing cables (2) and/or lines, wherein the cable holder (1) is made from a one-piece rigid wire profile which extends in the length direction and comprises a number of recurring zones (4) in which the wire profile is folded a number of times, so that a support part (6) for a cable (2) and/or line and screening parts (7) are formed at the location of each zone, wherein the cable holder (1) is configured such that a cable (2) and/or line may be placed bearing against the support part (6) by means of flexible bending of the cable (2) along the screen parts (7) and wherein the screening parts (7) prevent the unintentional loss of the cable (2) and/or line from the cable holder (1),
**characterized in that**
a) the support part (6) comprises a pointed securing part by means of which the cable holder is securable on a securing surface (3) such that the cable holder and the securing surface are only connectable to each other via a number of point contacts;
b) a V shape is provided in the support part of the wires at regular distances.

2. Cable holder (1) according to Claim 1, **characterized in that** the screening parts (7) and the support parts (6) remain in a fixed position with respect to each other before, during and after the fitting of a cable (2) and/or line.

3. Cable holder (1) according to one of the preceding claims, **characterized in that** the wire profile has a diameter of between 2 and 15 mm.

4. Cable holder (1) according to one of the preceding claims, **characterized in that** the distance between the recurring zones is between 50 and 200 mm.

5. Cable holder (1) according to one of the preceding claims, **characterized in that** the support part (6) of each zone is accessible via an access opening formed between two spaced-apart screening parts (7).

6. Cable holder (1) according to Claim 5, **characterized in that** the distance between the screening parts of a zone is between 5 and 50 mm.

7. Cable holder (1) according to Claim 5 or 6 , **characterized in that** the screening parts (7) of the same zone extend parallel to one another.

8. Cable holder (1) according to one of the preceding claims, **characterized in that** the cable holder (1) is made of steel, stainless steel, galvanized steel or plastic.

9. Cable holder (1) according to one of the preceding claims, **characterized in that** the cross section of the cable holder (1) is between 100 and 5000 mm².

10. A system comprising a cable holder (1) for hygienically securing cables (2) and/or lines, and a cable and/or line, wherein the cable holder (1) is made from a one-piece rigid wire profile which extends in the length direction and comprises a number of recurring zones (4) in which the wire profile is folded a number of times, so that a support part (6) for the cable (2) and/or line and screening parts (7) are formed at the location of each zone, wherein the cable (2) and/or line may be placed bearing against the support part (6) by means of flexible bending of the cable (2) and/or line along the screening parts (7) and wherein the screening parts (7) prevent the unintentional loss of the cable (2) and/or line from the cable holder (1),
**characterized in that**
a) the support part (6) comprises a pointed securing part by means of which the cable holder is securable on a securing surface (3) such that the cable holder and the securing surface are only connectable to each other via a number of point contacts;
b) a V shape is provided in the support part of the wires at regular distances.

11. A system according to claim 10, wherein the cable holder (1) is a cable holder according any one of the claims 2 to 9.

## Patentansprüche

1. Kabelhalter (1) zum hygienischen Sichern von Kabeln (2) und/oder Leitungen, wobei der Kabelhalter (1) aus einem einstückigen starren Drahtprofil gefertigt ist, das sich in der Längsrichtung erstreckt und eine Anzahl von wiederkehrenden Zonen (4) umfasst, in denen das Drahtprofil eine Anzahl von Malen gefaltet ist, sodass ein Stützteil (6) für ein Kabel (2) und/oder eine Leitung und Schirmungsteile (7) am Ort jeder Zone ausgebildet sind,
wobei der Kabelhalter (1) so ausgelegt ist, dass ein Kabel (2) und/oder eine Leitung so platziert werden kann, dass es bzw. sie mittels einer flexiblen Biegung des Kabels (2) entlang der Schirmungsteile (7) an dem Stützteil (6) anliegt,
wobei die Schirmungsteile (7) den unbeabsichtigten Verlust des Kabels (2) und/oder der Leitung aus dem Kabelhalter (1) verhindern,
**dadurch gekennzeichnet, dass**
a) der Stützteil (6) einen spitzen Sicherungsteil umfasst, mittels dessen der Kabelhalter an einer Sicherungsoberfläche (3) sicherbar ist, sodass der Kabelhalter und die Sicherungsoberfläche nur über eine Anzahl von Punktkontakten miteinander verbindbar sind;
b) eine V-Form bei regelmäßigen Abständen im Stützteil der Drähte bereitgestellt ist.

2. Kabelhalter (1) nach Anspruch 1, **dadurch gekennzeichnet, dass** die Schirmungsteile (7) und die Stützteile (6) vor, während und nach dem Anbringen eines Kabels (2) und/oder einer Leitung in einer festen Position bezüglich zueinander bleiben.

3. Kabelhalter (1) nach einem der vorhergehenden Ansprüche, **dadurch gekennzeichnet, dass** das Drahtprofil einen Durchmesser von zwischen 2 und 15 mm aufweist.

4. Kabelhalter (1) nach einem der vorhergehenden Ansprüche, **dadurch gekennzeichnet, dass** der Abstand zwischen den wiederkehrenden Zonen zwischen 50 und 200 mm ist.

5. Kabelhalter (1) nach einem der vorhergehenden Ansprüche, **dadurch gekennzeichnet, dass** der Stützteil (6) jeder Zone über eine zwischen zwei voneinander beabstandeten Schirmungsteilen (7) gebildete Zugangsöffnung zugänglich ist.

6. Kabelhalter (1) nach Anspruch 5, **dadurch gekennzeichnet, dass** der Abstand zwischen den Schirmungsteilen einer Zone zwischen 5 und 50 mm ist.

7. Kabelhalter (1) nach Anspruch 5 oder 6, **dadurch gekennzeichnet, dass** sich die Schirmungsteile (7) der gleichen Zone parallel zueinander erstrecken.

8. Kabelhalter (1) nach einem der vorhergehenden Ansprüche, **dadurch gekennzeichnet, dass** der Kabelhalter (1) aus Stahl, Edelstahl, verzinktem Stahl oder Kunststoff gefertigt ist.

9. Kabelhalter (1) nach einem der vorhergehenden Ansprüche, **dadurch gekennzeichnet, dass** der Querschnitt des Kabelhalters (1) zwischen 100 und 5000 mm² ist.

10. System, umfassend einen Kabelhalter (1) zum hygienischen Sichern von Kabeln (2) und/oder Leitungen und ein Kabel und/oder eine Leitung, wobei der Kabelhalter (1) aus einem einstückigen starren Drahtprofil gefertigt ist, das sich in der Längsrichtung erstreckt und eine Anzahl von wiederkehrenden Zonen (4) umfasst, in denen das Drahtprofil eine Anzahl von Malen gefaltet ist, sodass ein Stützteil (6) für das Kabel (2) und/oder die Leitung und Schirmungsteile (7) am Ort jeder Zone ausgebildet sind, wobei das Kabel (2) und/oder die Leitung so platziert werden kann, dass es bzw. sie mittels einer flexiblen Biegung des Kabels (2) und/oder der Leitung entlang der Schirmungsteile (7) an dem Stützteil (6) anliegt, und wobei die Schirmungsteile (7) den unbeabsichtigten Verlust des Kabels (2) und/oder der Leitung aus dem Kabelhalter (1) verhindern,
**dadurch gekennzeichnet, dass**
a) der Stützteil (6) einen spitzen Sicherungsteil umfasst, mittels dessen der Kabelhalter an einer Sicherungsoberfläche (3) sicherbar ist, sodass der Kabelhalter und die Sicherungsoberfläche nur über eine Anzahl von Punktkontakten miteinander verbindbar sind;
b) eine V-Form bei regelmäßigen Abständen im Stützteil der Drähte bereitgestellt ist.

11. System nach Anspruch 10, wobei der Kabelhalter (1) ein Kabelhalter nach einem der Ansprüche 2 bis 9 ist.

## Revendications

1. Support de câble (1) pour fixer de manière hygiénique des câbles (2) et/ou des lignes, le support de câble (1) étant réalisé à partir d'un profilé en fil métallique rigide d'une seule pièce qui s'étend dans la direction de la longueur et comprend un certain nombre de zones récurrentes (4) dans lesquelles le profilé en fil métallique est plié un certain nombre de fois, de sorte qu'une pièce de support (6) pour un câble (2) et/ou une ligne et des pièces de blindage (7) soient formées à l'emplacement de chaque zone, le support de câble (1) étant conçu de sorte qu'un câble (2) et/ou une ligne puisse être placé en appui contre la pièce de support (6) au moyen d'une flexion flexible du câble (2) le long des pièces de blindage (7) et les pièces de blindage (7) empêchant la perte involontaire du câble (2) et/ou de la ligne du support de câble (1),
**caractérisé en ce que**
a) la pièce de support (6) comprend une partie de fixation pointue au moyen de laquelle le support de câble peut être fixé sur une surface de fixation (3) de sorte que le support de câble et la surface de fixation ne puissent être reliés l'un à l'autre que par un certain nombre de contacts ponctuels ;
b) une forme en V étant disposée dans la partie support des fils à des distances régulières.

2. Support de câble (1) selon la revendication 1, **caractérisé en ce que** les pièces de blindage (7) et les parties de support (6) restent dans une position fixe les unes par rapport aux autres avant, pendant et après le montage d'un câble (2) et/ou d'une ligne.

3. Support de câble (1) selon l'une des revendications précédentes, **caractérisé en ce que** le profil de fil a un diamètre compris entre 2 et 15 mm.

4. Support de câble (1) selon l'une des revendications précédentes, **caractérisé en ce que** la distance entre les zones récurrentes est comprise entre 50 et 200 mm.

5. Support de câbles (1) selon l'une des revendications précédentes, **caractérisé en ce que** la pièce de support (6) de chaque zone est accessible par une ouverture d'accès formée entre deux pièces de blindage (7) espacées l'une de l'autre.

6. Support de câble (1) selon la revendication 5, **caractérisé en ce que** la distance entre les pièces de blindage d'une zone est comprise entre 5 et 50 mm.

7. Support de câble (1) selon la revendication 5 ou 6, **caractérisé en ce que** les pièces de blindage (7) de la même zone s'étendent parallèlement les unes par rapport aux autres.

8. Support de câble (1) selon l'une des revendications précédentes, **caractérisé en ce que** le support de câble (1) est en acier, en acier inoxydable, en acier galvanisé ou en plastique.

9. Support de câble (1) selon l'une des revendications précédentes, **caractérisé en ce que** la section transversale du support de câble (1) est comprise entre 100 et 5 000 mm².

10. Système comprenant un support de câble (1) pour fixer de manière hygiénique des câbles (2) et/ou des lignes, le support de câble (1) étant réalisé à partir d'un profilé en fil métallique rigide d'une seule pièce qui s'étend dans la direction de la longueur et comprend un certain nombre de zones récurrentes (4) dans lesquelles le profilé en fil métallique est plié un certain nombre de fois, de sorte qu'une pièce de support (6) pour un câble (2) et/ou une ligne et des pièces de blindage (7) soient formées à l'emplacement de chaque zone, le support de câble (1) étant conçu de sorte qu'un câble (2) et/ou une ligne puisse être placé en appui contre la pièce de support (6) au moyen d'une flexion flexible du câble (2) le long des pièces de blindage (7) et les pièces de blindage (7) empêchant la perte involontaire du câble (2) et/ou de la ligne du support de câble (1),
**caractérisé en ce que**
a) la pièce de support (6) comprend une partie de fixation pointue au moyen de laquelle le support de câble peut être fixé sur une surface de fixation (3) de sorte que le support de câble et la surface de fixation ne puissent être reliés l'un à l'autre que par un certain nombre de contacts ponctuels ;
b) une forme en V étant disposée dans la partie support des fils à des distances régulières.

11. Système selon la revendication 10, le support de câble (1) étant un support de câble selon l'une quelconque des revendications 2 à 9.
